Europäisches Patentamt

(19) European Patent Office

Office européen des brevets

(11) Publication number: **0 026 530**
**B1**

(12) **EUROPEAN PATENT SPECIFICATION**

(45) Date of publication of patent specification: **23.02.83**

(51) Int. Cl.³: **B 01 D 21/26, B 04 B 9/06, B 04 B 5/12**

(21) Application number: **80200883.9**

(22) Date of filing: **19.09.80**

(54) **A centrifugal filter for cleaning lubricating oils, particularly for internal combustion engines.**

(30) Priority: **02.10.79 IT 2616779**

(43) Date of publication of application:
**08.04.81 Bulletin 81/14**

(45) Publication of the grant of the patent:
**23.02.83 Bulletin 83/8**

(84) Designated Contracting States:
**AT BE CH DE FR GB LI LU NL SE**

(56) References cited:
**FR - A - 1 091 235**
**GB - A - 1 476 670**
**GB - A - 2 006 031**
**US - A - 2 082 690**
**US - A - 2 747 793**
**US - A - 2 755 992**

(73) Proprietor: **Susani, Pierangelo**
**Via Mentana, 18**
**I-35100 Padova (IT)**

(72) Inventor: **Susani, Pierangelo**
**Via Mentana, 18**
**I-35100 Padova (IT)**

(74) Representative: **Giambrocono, Alfonso, Dott. Ing.**
**Via Rosolino Pilo 19/B**
**I-20129 Milano (IT)**

Courier Press, Leamington Spa, England

## A centrifugal filter for cleaning lubricating oils, particularly for internal combustion engines

The present invention relates to a centrifugal filter for cleaning lubricating oils, particularly for internal combustion engines.

In the specific field of internal combustion engines, the cleaning of lubricating oils is provided, as well known, by causing the oil to pass through a 'cartridge' filter, or by a centrifugal filter, the operation of which is derived from the driving shaft.

In the case of 'cartridge' filters, the latter require to be periodically replaced, while in the case of centrifugal filters, particular mechanical expedients are required for the actuation of the filter by the driving shaft.

The object of the present invention is to provide a centrifugal oil filter replacing the conventional 'cartridge' filters without any modification to the engine, and capable of operating without requiring any connection to the driving shaft.

According to the invention, a centrifugal oil filter is provided comprising a rotor rotatably driven by the pressure of the circulating oil, a bladed element integral with and downstream of said rotor, a grate circumferentially located relative to said bladed element for retaining the impurities contained in said oil, a passageway for supplying pressure oil to said rotor, and a passageway downstream of said grate for exhausting the cleaned oil from the filter, rotation of the rotor causing rotation of the bladed element whereby the latter imparts a centrifugal force to the oil and causes impurities to migrate to the grate for retention thereby.

A preferred embodiment of a centrifugal oil filter according to the invention is shown by mere way of unrestrictive example in the figures of the accompanying drawings, in which:

— Fig. 1 shows the filter as a whole;

— Fig. 2 is a sectional view taken along line II—II of Fig. 1; and

— Fig. 3 is a sectional view taken along line III—III of Fig. 2.

Referring to the figures, the oil filter — generally designated at 1 — comprises an outer circular shell or housing 2, for example made by thin plate, having screwed housed therein an inner body member 3, for example made of light alloy, on the upper face of which a threaded passageway 4 is provided for screwing to a conduit (not shown) used for recycling of the cleaned oil to the engine, and passageways 5 circumferentially arranged about said passageway 4 for oil inlet from the engine to filter 1. A gasket 6 assures the sealing effect between said body member 3 and outer shell or housing 2, whereas a gasket 7 assures the sealing effect between said body 3 and a conventional seat provided on the cylinder block and at present used for housing the conventional 'cartridge' filter.

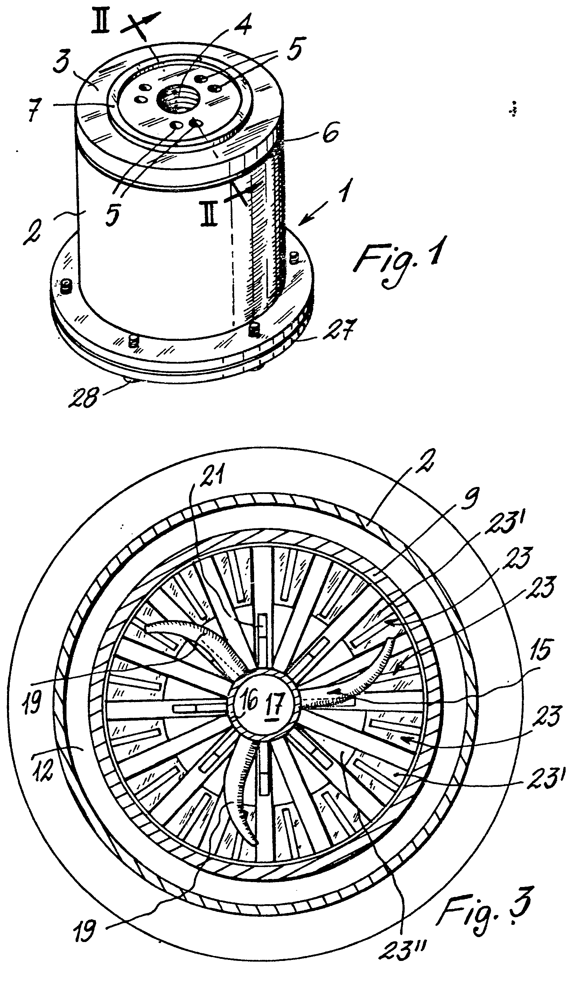

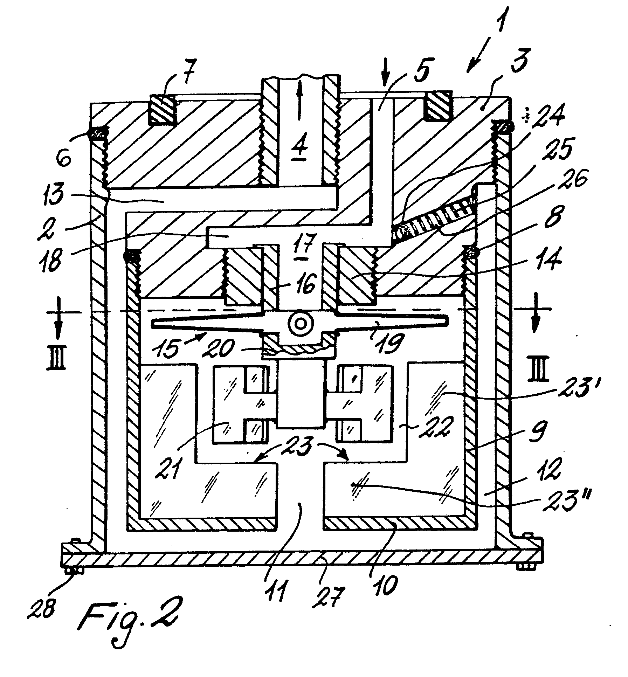

A cylindrical element 9 is mounted by screwing and with the interposition of a gasket 8 on said body member 3, the bottom 10 of said cylindrical element having a central passageway 11. Such is the configuration of said element 9 that, when in position, it defines with the inner wall of shell or housing 2 a gap or hollow space 12 communicating through radial passageways 13 (only one of which is shown in Fig. 2) with the outlet threaded passageway 4.

The lower face or underside of said body member 3, internally of the cylindrical element 9 and centrally of the latter, has mounted thereon a bushing 14 for free rotatable support of a rotor, generally designated at 15. Said rotor 15 essentially comprises a hollow stem 16, the cavity or bore 17 of which communicates through a chamber 18 with the inlet passageways 5, while three nozzles 19 branch off from the bottom thereof, these nozzles being suitably oriented at the same angle to the rotor stem. The bottom 20 of said rotor 15 has thereto secured a bladed element 21 enclosed within a space 22 circumferentially defined by a grate generally designated at 23.

As particularly shown in Figs. 2 and 3, said grate 23 comprises a plurality of radially disposed L-shaped tab elements each formed by a vertical portion 23' and a horizontal portion 23", both portions having a substantially triangular cross section. Said L-shaped tab elements are spaced from one another to receive and retain the impurities separated by centrifugal force from the oil.

The above mentioned chamber 18 communicates with said gap or hollow space 12 by means of a plurality of small ball valves (only one of which is shown in Fig. 2), each of which comprising a ball 24 reacted by a calibrated spring 25 and each contained within a passageway 26 provided on said body member 3.

The filter 1 is completed by a cover or lid 27, making up the bottom of shell 2, which can be removed by removal of screws 28.

In operation, when the filter 1 is used on an internal combustion engine provided with a 'cartridge' filter said filter 1 is mounted within the housing of said 'cartridge' filter, and in substitution for the latter, by screwing the outlet passageway 4 on the recycle conduit for the cleaned oil. Owing to the calculated dimensions, corresponding to those of a conventional cartridge, the gasket 7 will sealingly cooperate with a corresponding part of the cylinder block.

Due to the pressure delivery of the oil pump, the oil is supplied from the engine cup or pan through the passageways 5 to the chamber 18 and exits therefrom through the nozzles 19 and, by reaction effect owing to the suitable orientation of said nozzles, causes the rotation of the rotor 15 and accordingly of the bladed element 21. Thus, the oil stored within the space 22 is centrifuged and the impurities therein contained are propelled into and retained by the grate 23. The cleaned oil exits from aperture 11, is supplied to the gap or hollow space 12 and therefrom delivered through the radial passageways 13 to the outlet passageway 4 and recycled to the engine.

The grate 23 can be easily cleaned, without having to remove the whole filter 1, by merely moving the bottom 27 away and removal of bottom 10 removably secured to said cylindrical element 9: by so operating, a free access to said grate 23 is gained, which grate can be in case extracted along with said bottom 10.

The ball valves 24—26 act as by-pass in case of casual shut off of the oil passage through the nozzles 19.

## Claims

1. A centrifugal oil filter (1) particularly for internal combustion engines, comprising a rotor (15) rotatably driven by the pressure of the circulating oil, a bladed element (21) integral with and downstream of said rotor, a grate (23) circumferentially located relative to said bladed element for retaining the impurities contained in said oil, a passageway (5, 17, 18) for supplying pressure oil to said rotor, and a passageway (11, 12, 13, 4) downstream of said grate for exhausting the cleaned oil from said filter, rotation of the rotor causing rotation of the bladed element whereby the latter imparts a centrifugal force to the oil and causes impurities to migrate to the grate for retention thereby.

2. A centrifugal oil filter according to claim 1, wherein said rotor comprises a hollow stem (16) providing a hub for free rotation of said rotor, and a plurality of nozzles (19) communicating with the hollow portion of said stem, all of said nozzles being oriented at the same angle to the rotor stem to cause the rotation of said rotor and of said bladed element therewith associated by reaction effect.

3. A centrifugal oil filter according to claim 2, wherein at least one relief valve (24—26) is interposed between said supply and exhaust passageway, so as to operate as a by-pass in case of casual shut off of the oil passage through said nozzles.

## Revendications

1. Filtre à huile centrifuge (1) particulièrement destiné aux moteurs à combustion interne, comportant un rotor (15) entrainé en rotation par la pression de l'huile en circulation, un élément à pales (21) solidaire du rotor et disposé en aval de celui-ci, une grille (22) disposée circonférentiellement par rapport à l'élément à pales pour retenir les impuretés contenues dans l'huile, un orifice de passage (5, 17, 18) amenant de l'huile sous pression au rotor et un orifice de passage (11, 12, 13, 4) en aval de la grille pour aspirer l'huile épurée du filtre, la rotation du rotor provoquant la rotation de l'élément à pales, et ce dernier communiquant à l'huile une force centrifuge et faisant migrer les impuretés vers la grille par laquelle elles sont retenues.

2. Filtre à huile centrifuge suivant revendication 1, sur lequel le rotor comporte une tige creuse (16) fournissant un moyeu pour la rotation libre du rotor et plusieurs tubulures communiquant avec la partie creuse de la tige, toutes les tubulures étant orientées au même angle sur la tige du rotor pour produire la rotation du rotor et de l'élément à pales solidaire, par réaction.

3. Filtre à huile centrifuge suivant revendication 2, sur lequel il y a au moins une soupape de décompression (24—26) interposée entre les orifices de passage de refoulement et d'aspiration, de façon à fonctionner comme un by-pass en cas de fermeture du passage d'huile à travers les tubulures.

## Patentansprüche

1. Zentrifugalfilter zum Reinigen von Schmierölen, insbesondere für Brennkraftmaschinen, gekennzeichnet durch einen, durch den Druck des zirkulierenden Öls in Drehung versetzbaren Rotor (15), ein mit dem Rotor verbundenes, mit Schaufeln versehenes Element (21), einen in bezug auf dieses Element umfänglich angeordneten Rost (23) zum Zurückhalten der im Öl enthaltenen Verunreinigungen, einen Kanal (5, 17, 18) zur Zuführung von Drucköl zum Rotor, sowie einen stromabwärts vom Rost angeordnet en Kanal (11, 12, 13, 4) zum Abführen des gereinigten Öls aus dem Filter, wobei eine Drehung des Rotors eine Drehung des mit Schaufeln versehenen Elementes bewirkt und die durch letzteres auf das Öl ausgeübte Fliehkraft die Verunreinigungen zum Rost bringt, wo sie zurückgehalten werden.

2. Zentrifugalfilter nach Anspruch 1, dadurch gekennzeichnet, daß der Rotor eine hohle und frei drehbare Nabe (16) aufweist, deren Hohlraum mit einer Mehrzahl von Düsen (19) in Verbindung steht, welche Düsen alle unter dem gleichen Winkel zur Nabe ausgerichtet sind, so daß eine Drehung des Rotors und des mit Schaufeln versehenen Elements durch Reaktionswirkung erreicht wird.

3. Zentrifugalfilter nach Anspruch 2, dadurch gekennzeichnet, daß zwischen dem Kanal zur Zuführung von Drucköl und dem Kanal zum Abführen des gereinigten Öls mindestens ein Entlastungsgentil (24, 25, 26) angeordnet ist, das bei eventuell gesperrtmen Öldurchgang durch die Düsen als By-pass wirkt.

Fig. 1

Fig. 3

Fig. 2